Europäisches Patentamt

European Patent Office

Office européen des brevets

(19)

(11) **EP 0 897 163 B1**

(12) **FASCICULE DE BREVET EUROPEEN**

(45) Date de publication et mention
de la délivrance du brevet:
**10.12.2003 Bulletin 2003/50**

(51) Int Cl.⁷: **G06T 7/00**

(21) Numéro de dépôt: **98402025.5**

(22) Date de dépôt: **10.08.1998**

(54) **Procédé de production de données cartographiques par stéréovision**

Stereovisionsverfahren zur Erzeugung von kartographischen Daten

Stereovision method for producing cartographic data

(84) Etats contractants désignés:
**ES IT**

(30) Priorité: **12.08.1997 FR 9710284**

(43) Date de publication de la demande:
**17.02.1999 Bulletin 1999/07**

(73) Titulaire: **Matra Systèmes et Information**
**78140 Vélizy Villacoublay (FR)**

(72) Inventeurs:
• **Ayache, Nicolas**
**06000 Nice (FR)**
• **Canu, David**
**Les Tamaris, 91400 Orsay (FR)**
• **Sirat, Jacques Ariel**
**78350 Buc (FR)**

(74) Mandataire: **Loisel, Bertrand et al**
**Cabinet Plasseraud,**
**84, rue d'Amsterdam**
**75440 Paris Cédex 09 (FR)**

(56) Documents cités:
• **JONES G A: "CONSTRAINT, OPTIMIZATION, AND HIERARCHY: REVIEWING STEREOSCOPIC CORRESPONDENCE OF COMPLEX FEATURES" COMPUTER VISION AND IMAGE UNDERSTANDING, vol. 65, no. 1, janvier 1997, pages 57-78, XP000685839**
• **KANG S B ET AL: "A MULTIBASELINE STEREO SYSTEM WITH ACTIVE ILLUMINATION AND REAL- TIME IMAGE ACQUISITION" PROCEEDINGS OF THE FIFTH INTERNATIONAL CONFERENCE ON COMPUTER VISIO, CAMBRIDGE, MA., JUNE 20 - 23, 1995, no. CONF. 5, 20 juin 1995, pages 88-93, XP000557054 INSTITUTE OF ELECTRICAL AND ELECTRONICS ENGINEERS**

## Description

La présente invention concerne les procédés de production de données cartographiques en trois dimensions à partir de $n$ images à deux dimensions d'une scène, fournies par $n$ capteurs ayant des points de vue différents de la scène.

On sait depuis très longtemps définir la postion dans l'espace de structures présentes dans une scène et visibles dans deux images prises sous différents angles de vue, par des techniques stéréoscopiques. Ce procédé a été généralisé au cas de $n$ images, $n$ étant un entier supérieur à 2, ces $n$ images constituant un système stéréoscopique à plusieurs lignes de base.

On connaît notamment des procédés comportant les étapes suivantes :

- on calibre les $n$ capteurs (en utilisant la connaissance 3D de leur position relative par rapport à la scène observée et/ou des procédés de reconnaissance de formes, de façon à disposer des paramètres de $n$ modèles $F_i(x,y,z)$ définissant chacun la relation entre un point de la scène, de coordonnées x,y,z, et les coordonnées $(p,q)_i$ de sa projection dans chacune des $n$ images, pour i allant de 1 à n ;
- on met en correspondance les $n$ images, de façon à localiser dans les images les coordonnées de la projecion d'un même point dans l'espace à trois dimensions ;
- on effectue une reconstruction 3D, consistant à obtenir les coordonnées x,y et z du point 3D correspondant à chaque appariement entre images, à partir de la connaissance des modèles $F_i$ et des points images appariés.

Un procédé de ce genre est décrit dans l'article de Sing Bing Kang et al. "A Multibaseline Stereo System with Active Illumination and Real-Time Image Acquisition", Proceedings IEEE Int. Conf. on Computer Vision, pages 88-93, juin 1995 (voir aussi la référence [13] citée dans l'article : Masataski Okutomi et al. "A multiple baseline stereo", IEEE Transactions on Pattern Analysis and Machine Intelligence Vol. 15, No. 4, April 1995, pp. 353-363). Le procédé proposé dans cet article met en oeuvre quatre caméras dont les axes optiques convergent approximativement en un même point. L'image fournie par une des caméras est choisie comme référence. Etant donné que les axes des caméras ne sont pas parallèles, les lignes épipolaires associées ne sont pas parallèles aux lignes des images. Pour simplifier la restitution de l'altitude à partir des images stéréoscopiques, c'est-à-dire la reconstruction 3D, les images sont soumises à une rectification qui transforme chaque paire d'images d'origine en une autre paire telle que les lignes épipolaires qui en résultent soient parallèles, égales et confondues avec les lignes des images. Le mode de mise en correspondance utilise une variable $\lambda$, définie comme la distance au centre optique, suivant l'axe de visée passant par le centre optique de la caméra de référence et le point considéré, pour calculer la zone de recherche d'homologues potentiels dans les images à apparier à l'image de référence. L'utilisation de cette variable $\lambda$ conduit inévitablement à un modèle de passage non linéaire entre les images, ce qui complique les calculs. La stratégie enseignée par l'article, consistant à affecter une importance égale à chaque couple, est source d'erreur chaque fois que des points sont masqués dans une ou plusieurs des images.

Une étude détaillée d'algorithmes de fusion de plusieurs représentations pour restituer des données cartographiques 3D à partir de plusieurs images 2D d'une scène est donnée dans la thèse de l'Université de Paris Sud, Centre d'Orsay, Mai 1988 "Construction et Fusion de Représentations Visuelles 3D : Applications à la Robotique Mobile" de N. Ayache.

La présente invention vise à fournir un procédé de production de données cartographiques répondant mieux que ceux antérieurement connus aux exigences de la pratique, notamment en ce qu'il facilite la mise en correspondance multi-couples de $n$ images (n étant un entier supérieur à 2) et est suffisamment souple pour s'adapter sans difficulté à de nombreux domaines, tels que :

- la détection d'obstacles et le guidage autonome d'un robot mobile, dans une scène fixe,
- la modélisation 3D de sites réels,
- la cartographie,
- la reconnaissance aérienne, permettant d'obtenir un profil de terrain,
- la modélisation de trajectoires optimales, lors de la préparation d'une mission aérienne.

Pour cela, le procédé utilise notamment la constatation que, quelle que soit la nature des capteurs (sténopé, barrette de sites photodétecteurs, capteur à balayage) et leur position relative au moment de l'acquisition des images (à condition qu'elles soient stéréoscopiques et qu'il y ait un recouvrement entre plusieurs images) on peut toujours exprimer les n-1 courbes de ressemblance, correspondant chacune à un couple d'images dont une image de référence unique, en fonction de la disparité, définie dans un couple quelconque: Pour cela, on effectue un changement de référentiel des courbes de ressemblance, qui peut toujours être réalisé par un modèle affine de passage de la disparité d'un couple à celle d'un autre couple.

La disparité pourra en général être assimilée à l'abcisse curviligne d'un point par rapport à un autre le long de l'épipolaire ; elle peut être mesurée en pixels dans le cas fréquent d'une image représentée par des points élémentaires affectés chacun d'au moins une valeur radiométrique (luminance et/ou chrominance).

L'invention propose notamment un procédé de production de données cartographiques en trois dimensions à partir de $n$ images à deux dimensions de la scène, fournies par $n$ capteurs avec des points de vue différents, $n$ étant un entier supérieur à 2, suivant lequel :

(a) on calibre chaque capteur d'ordre $i$ pour estimer les paramètres des $n$ modèles $F_i(x,y,z)$ définissant la relation entre les coordonnées x,y,z d'un point de la scène et les coordonnées $(p,q)_i$ de sa projection dans l'image $i$ parmi les $n$ images ;

(b) on met en correspondance chacun des n-1 couples d'images comportant toutes une même image de référence choisie parmi les $n$ images, en recherchant l'homologue de chaque pixel ou zone de l'image de référence le long de l'épipolaire correspondante de l'autre image du couple ;

(c) dans chacun des n-1 couples de deux images comprenant chacune une image de référence et pour chaque pixel ou zone de l'image de référence, on établit une courbe de ressemblance (courbe de variation d'un indice de similarité) en fonction de la disparité, le long de l'épipolaire de l'autre image ;

(d) on ramène toutes les courbes dans un référentiel commun, par un modèle par exemple affine, pour apparier le plus grand nombre possible d'images ;

(e) on effectue la sommation des courbes, en écartant éventuellement chaque pic situé à une disparité singulière par rapport à celui de toutes les autres courbes et on retient le pic le plus élevé de la courbe résultante ; et

(f) on calcule les coordonnées x,y,z à partir de la disparité du pic retenu et des paramètres des $n$ modèles $F_i(x,y,z)$.

Il est également possible de calculer plusieurs images de disparité en prenant différentes images comme référence. La fusion peut s'effectuer après calcul des coordonnées en trois dimensions ; elle peut aussi s'effectuer au niveau des images de disparité, ce qui est une solution avantageuse lorsque les capteurs sont calibrés dans un espace projectif.

La fusion des résultats de mise en correspondance multi-couples peut être réalisée à l'aide d'un vote majoritaire, en affectant un coefficient de pondération plus élevé aux pics correspondant aux points de vue les plus distants de l'image de référence.

Le procédé qui vient d'être décrit permet d'écarter dans la plupart des cas les difficultés rencontrées pour trouver à coup sûr l'homologue d'un point de l'image dans une ou plusieurs autres images. L'utilisation d'un nombre $n$ supérieur à 2 permet d'écarter les conséquences d'une occultation dans une ou plusieurs images. La cohérence géométrique des appariements multiples réduit les erreurs et lève les ambiguïtés. La présence d'images ayant des points de vue proches permet de traiter des images ressemblantes ayant peu d'occultation entre elles; l'utilisation d'images ayant des points de vue distants permet d'obtenir une information 3D précise.

Les caractéristiques ci-dessus ainsi que d'autres apparaîtront mieux à la lecture de la description qui suit de modes particuliers de réalisation de l'invention, donnés à titre d'exemple non limitatif. La description se réfère aux dessins qui l'accompagnent, dans lesquels :

- la figure 1 est un schéma représentant une disposition possible des capteurs et montrant le rôle de la rectification ;
- la figure 2 montre le principe des appariements d'un point par recherche sur des portions d'épipolaire ;
- la figure 3 montre des exemples de courbes de variation d'un indice de ressemblance en fonction de la disparité ;
- la figure 4 représente un exemple de schéma d'exploitation des images dans le cadre de l'appariement multi-images ;
- la figure 5 montre un procédé de fusion des traitements multi-images ;
- la figure 6 montre un mode de mise en référence de courbes de ressemblance par rapport à un plan ; et
- les figures 7A et 7B, qui montrent des courbes de ressemblance en fonction de la disparité, montrent l'intérêt d'une sélection des courbes.

On décrira tout d'abord l'architecture générale du procédé, qui est conservée quelle que soit l'application, avant d'envisager des cas particuliers. Pour simplifier, les parties déjà bien connues du procédé suivant l'invention ne seront que brièvement rappelées et on pourra se reporter aux documents déjà mentionnés ainsi que :

- en ce qui concerne le cas simple de capteurs de type sténopé, tous identiques, fournissant des images acquises dans des positions coplanaires, à la même altitude, à l'article de R.Y. Tsai "Multiframe Image Point Matching and 3-D Surface Reconstruction" IEEE Transactions on Pattern Analysis and Machine Intelligence, PAMI-5, n° 2, pages 159-164, mars 1983 ;
- en ce qui concerne la cartographie à partir de cartes d'images aériennes numériques calibrées, à l'article de L.

Gabet et al. "Construction Automatique de Modèle Numérique de Terrain à Haute Résolution en Zone Urbaine", Bul. SFPT n° 135, pages 9-25, 1994.

Le procédé suivant l'invention comporte trois phases essentielles :

- le calibrage des capteurs (étape (a) ci-dessus),
- la mise en correspondance ou appariement des images, impliquant la fusion d'au moins n̲ résultats de mise en correspondance multi-couples, ces résultats étant les cartes de disparité directement obtenues ou des modèles numériques d'élévation (MNE) calculés à partir de ces dernières,
- la reconstruction 3D (étape (f)).

Ces trois phases seront successivement décrites.

Calibrage

Le calibrage des capteurs a pour but de fournir une estimation des paramètres des modèles $F_1(x,y,z)$ et $F_i(x,y,z)$ qui définissent la relation entre les coordonnées x,y,z d'un point 3D de la scène et les coordonnées 2D (p,q) de sa projection dans le plan image respectivement $\pi_1$ et $\pi_i$.

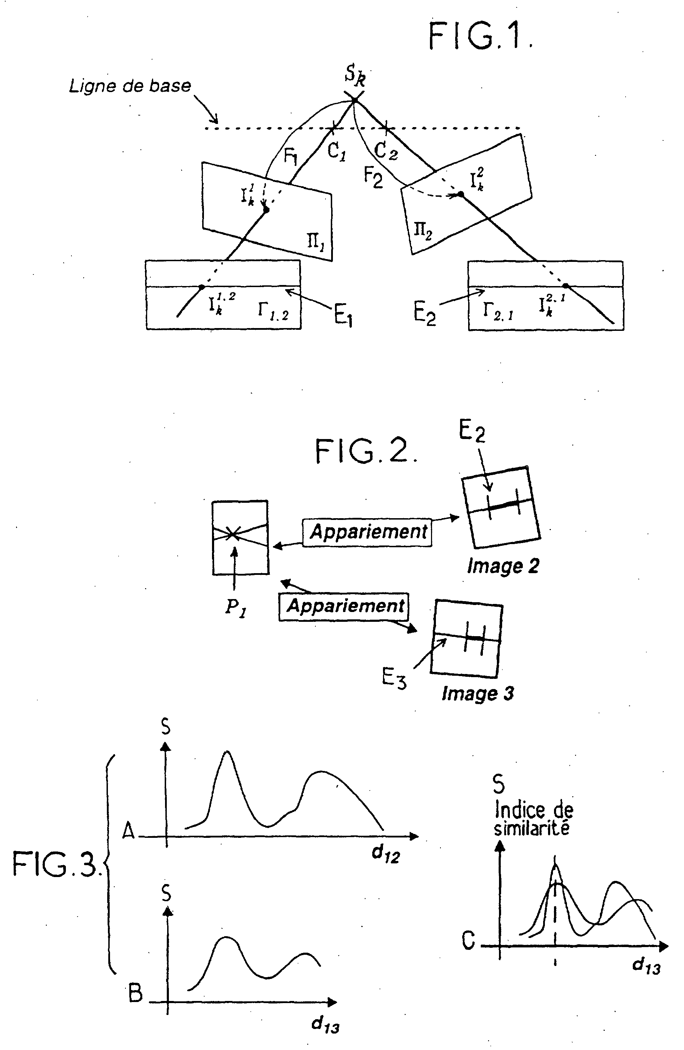

Le procédé exige une telle calibrage préalable des capteurs. Dans le cas simple de deux capteurs seulement, illustré en figure 1, le calibrage a pour but d'estimer les paramètres des modèles

$$F_1(x,y,z)$$

$$F_2(x,y,z)$$

qui définissent la relation entre un goint $S_k$ de la scène, défini en trois dimensions par ses coordonnées x,y et z et les coordonnées $(p,q)_i$ de sa projection dans le plan image $\pi_i$ (avec i = 1 ou 2).

Le calibrage est effectué différemment selon la nature des capteurs, par des procédés connus, comme par exemple celui décrit dans l'article de Ayache mentionné plus haut. On peut utiliser des correspondances entre des points homologues des images, définies manuellement ou obtenues par des techniques de reconnaissance de forme portant sur des voisinages.

A l'issue de cette étape, on dispose de l'ensemble des modèles $F_i(x,y,z)$ avec $i \in \{1,...,n\}$ et des directions de recherche des points correspondants, qui sont celles des épipolaires.

Toutefois, lorsque le calibrage est réalisé sans connaissance initiale 3D de la scène, la reconstruction 3D ne peut être définie par les méthodes classiques qu'à une transformation projective près de l'espace projectif 3D. On verra plus loin que le procédé multi-couples suivant l'invention est indépendant de la géométrie et permet d'appréhender les variations d'altitude dans la scène.

Mise en correspondance multi-couples

L'appariement des images s'effectue en recherchant l'homologue de chaque point P d'une image de référence, généralement défini avec son voisinage sous forme d'une vignette, le long des épipolaires $E_2, E_3,...$ des autres images (figure 2). Pour cela, on établit des courbes de similarité en fonction de la disparité $d_{12}, d_{13},...$ (lignes A et B). L'indice de similarité S peut être notamment un coefficient d'inter-corrélation ou un indice de ressemblance sur des contours ou des régions. Toutes les courbes sont ensuite ramenées dans un référentiel commun, par exemple $d_{13}$, qui fera apparaître un appariement probable avec une précision sub-pixélique correspondant à la coïncidence des pics (ligne C de la figure 3).

Un changement de référentiel est nécessaire si on veut exprimer toutes les courbes dans un même référentiel en vue de leur fusion ; il utilise un modèle affine élaboré en fonction de la géométrie d'acquisition des images. Ce modèle est de la forme, pour un exemple impliquant trois images en tout :

$$d_{13} = a(\eta,\mu)d_{12} + b(\eta,\mu)$$

où d désigne la disparité, $\eta$ et $\mu$ désignent les paramètres qui définissent la géométrie des couples (1,2) et (1,3) pour une position p sur l'épipolaire de la primitive (point, contour ou région) à apparier dans l'image 1.

Lorsque le calibrage est réalisé sans connaissance 3D de la scène, les coefficients a($\eta,\mu$) et b($\eta,\mu$) du modèle affine sont calculés en utilisant une rectification des images, destinée à transformer chaque paire d'images planes 2D en une autre paire telle que les lignes épipolaires soient parallèles et confondues avec les lignes ou les colonnes des images, comme indiqué sur la figure 1 où les épipolaires conjuguées rectifiées sont indiquées dans les plans rétiniens virtuels $\Gamma_{1,2}$ et $\Gamma_{2,1}$ pour les points $I^1_k$ et $I^2_k$ dans les plans image $\pi_1$ et $\pi_2$. La rectification facilite la mise en correspondance en permettant d'établir immédiatement les courbes de la figure 3.

A titre d'exemple, on peut indiquer que le modèle de passage (p,q) = $F_i$(x,y,z) pour un modèle sténopé est, en coordonnées projectives, une fonction linéaire de la forme :

$$\tilde{u} = P\ \tilde{x}$$

$$\text{avec } \tilde{u} = \begin{bmatrix} wp \\ wq \\ w \end{bmatrix} \qquad \text{et } \tilde{x} = \begin{bmatrix} sx \\ sy \\ sz \\ s \end{bmatrix}$$

P est une matrice 3x4 définie à un lecteur multiplicatif près ; w et s sont des facteurs multiplicatifs. Pour déterminer la matrice, 11 paramètres sont nécessaires. Ils peuvent être déterminés à condition de disposer d'au moins 6 points homologues.

Si on considère uniquement deux images, on peut définir un modèle de passage d'un point 3D de la scène aux coordonnées de sa projection dans chacune des images rectifiées 1 et 2 ; les matrices de projection perspectives M et N pour l'image 1 et l'image 2 définissant les modèles de passage sont :

$$\vec{u}_1 = M\ \vec{x}$$

$$\vec{u}_2 = N\ \vec{x}$$

Pour calculer les coefficients des matrices M et N, à un facteur d'échelle près, il faut respecter diverses contraintes :

- épipolaires parallèles dans les deux images (épipoles à l'infini) ;
- pour un point 3D quelconque $S_k$ n'appartenant pas au plan focal des caméras définis après rectification, ordonnées des pixels, représentés par les points $I_k^{1,2}$ et $I_k^{2,1}$, identiques (figure 1) ;
- coordonnées des centres optiques $C_1$ et $C_2$ invariants pour la rectification.

Les équations auxquelles conduisent ces contraintes sont données dans le document Ayache mentionné plus haut.

Une solution à ces équations peut être trouvée de manière à limiter les distorsions des images rectifiées. A titre d'exemple, on donne les expressions suivantes pour les matrices M et N :

$$\boldsymbol{M} = \begin{bmatrix} \alpha(\boldsymbol{t} \wedge \boldsymbol{c_1})^T & 0 \\ \beta(\boldsymbol{c_1} \wedge \boldsymbol{c_2})^T & 0 \\ ((\boldsymbol{c_1} - \boldsymbol{c_2}) \wedge \boldsymbol{t})^T & \boldsymbol{c_1}^T(\boldsymbol{c_2} \wedge \boldsymbol{t}) \end{bmatrix} \qquad \boldsymbol{N} = \begin{bmatrix} \alpha(\boldsymbol{t} \wedge \boldsymbol{c_2})^T & 0 \\ \beta(\boldsymbol{c_1} \wedge \boldsymbol{c_2})^T & 0 \\ ((\boldsymbol{c_1} - \boldsymbol{c_2}) \wedge \boldsymbol{t})^T & \boldsymbol{c_1}^T(\boldsymbol{c_2} \wedge \boldsymbol{t}) \end{bmatrix}$$

où :

$c_1$ et $c_2$ sont les vecteurs des coordonnées 3D des centres optiques $C_1$ et $C_2$ des caméras à sténopé ;

$\alpha$ et $\beta$ sont des facteurs d'échelle, conditionnant la déformation des images rectifiées dans la direction des épipolaires pour l'un et dans la direction orthogonale pour l'autre (si les épipolaires après rectification sont choisies horizontales).

f est un vecteur imposant l'orientation du plan de rectification (permettant de limiter les distorsions des images rectifiées).

La géométrie projective permet de calculer également les matrices M et N par l'intermédiaire des matrices fondamentales. On trouvera dans la thèse de l'Ecole Polytechnique "Vision stéréoscopique et propriétés différentielles des surfaces" de F. Devernay la description d'une telle approche.

Les matrices de passage des images réelles (ou acquises) aux images rectifiées peuvent se déduire des matrices M et N, par exemple de la manière indiquée dans le document Ayache.

Il faut ensuite définir un modèle inter-disparité par ses coefficients $a(\lambda,\mu)$ et $b(\lambda,\mu)$ tels que :

$$d_{13}(p) = a(\eta,\mu).d_{12} + b(\eta,\mu)$$

Ce modèle fait passer de la disparité $d_{12}(p)$ du point p dans le couple des images rectifiées 1 et 2 à la disparité $d_{13}(p)$ dans le couple formé des images 1 et 3. $\eta$ désigne le couple d'images (1,2) et $\mu$ désigne le couple d'images (1,3).

Les équations paramétriques des lignes de visée dans la caméra 1, définies à partir des coordonnées du pixel p dans l'image rectifiée dans la géométrie du couple $\eta$ et dans la géométrie du couple $\mu$ sont :

$$\vec{x} = c_1 + \lambda_1^\eta t_\eta \qquad et \qquad \vec{x} = c_1 + \lambda_1^\mu t_\mu$$

où $\vec{x}$ désigne les coordonnées 3D d'un point $c_1$ (coordonnées du centre optique de la caméra 1) et $t_\eta$ et $t_\mu$ sont les vecteurs directeurs définis de façon simple en fonction des termes de la matrice M :

$$t_\eta = \varepsilon_\eta (m_1^\eta - p_1^\eta m_3^\eta) \wedge (m_2^\eta - q_1^\eta m_3^\eta)$$

$$t_\mu = \varepsilon_\mu (m_1^\mu - p_1^\mu m_3^\mu) \wedge (m_2^\mu - q_1^\mu m_3^\mu)$$

où $\varepsilon$ désigne un coefficient de normalisation du vecteur t.

On en déduit que $\lambda_1^\eta = \tau^{\mu.\eta} \cdot \lambda_1^\eta$

avec $\tau^{\mu.\eta} = (t_\eta^T.t_\mu)/\|t_\eta\|$

Les expressions de a et b s'en déduisent directement

$$a(\eta,\mu) = \frac{k_1^\mu \cdot \tau^{\mu.\eta}}{k_1^\eta}$$

$$b(\eta,\mu) = k_2^\mu - \frac{k_1^\mu}{k_1^\eta} \cdot k_2^\eta \cdot \tau^{\mu,\eta}$$

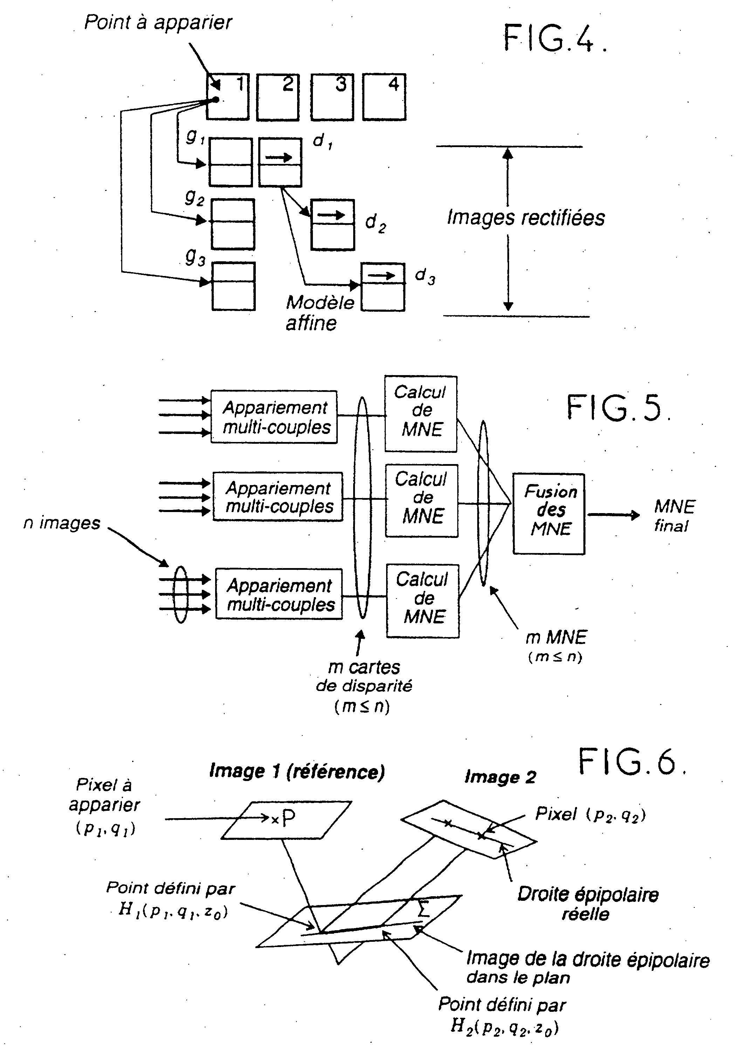

On considèrera de nouveau le cas particulier et simple où les capteurs sont de type sténopé. L'appariement multi-couples peut s'effectuer par la démarche schématisée en figure 4, dans le cas de quatre images réelles, numérotées 1, 2, 3 et 4. Après rectification, un point P de l'image 1 pris comme référence sera recherché sur les épipolaires correspondantes des images 2, 3 et 4. En utilisant la notation montrée en figure 4, les appariements multi-couples sont réalisés entre les images $g_i$ et $d_i$, avec

$i \in \{1,2,3\}$

Les coefficients a et b du modèle affine du passage de la disparité d'un couple à la disparité d'un autre couple peuvent s'exprimer simplement en fonction de la position du pixel P à apparier, de la géométrie du couple d'origine et de celle du couple de destination.

Comme on l'a indiqué plus haut, on fusionne ensuite l'ensemble des appariements obtenus en prenant n différentes images comme référence (n=4 dans le cas de la figure 4). Cette opération peut s'effectuer après calcul des modèles numériques de terrain (MNT) ou d'élévation (MNE), comme indiqué en figure 5. Mais elle peut être effectuée par fusion des cartes de disparité, pour obtenir une carte de disparité finale, avant de déterminer le MNE final.

De préférence, la fusion est réalisée sur le principe des votes majoritaires ou sélection d'une valeur médiane. Une pondération est utilisée au moment de la réalisation des votes. Elle est calculée en affectant un poids maximum aux points de vue les plus distants de l'image de référence.

Lorsque la géométrie des capteurs est connue (modèle sténopé, scanner, barrette) on donnera quelques indications sur un mode de mise en correspondance ou appariement dans le cas de deux images 1 et 2, l'image I étant l'image de référence. Les notations sont celles de la figure 6. La mise en référence prend en compte un plan $\Sigma$ à une altitude constante $z=z_0$. Les fonctions $F_i$ sont connues, et, dans le cas de modèles sténopés, reviennent aux matrices de projection perspective $M_i$. On peut en conséquence toujours exprimer les coordonnées $(p, q)$ en 2D dans le plan $\Sigma$ pour $z=z_0$ à partir de deux pixels $(p_1,q_1)$ et $(p_2,q_2)$ mis en correspondance dans les images 1 et 2.

Si $(x_1,y_1)$ est le point du plan $\Sigma$ qui est l'image du pixel $(p_1,q_1)$ à apparier de l'image 1, et $(x_2,y_2)$ est l'image du pixel $(p_2,q_2)$ de l'image 2, alors on définit la disparité associée à cet appariement potentiel comme la distance euclidienne dans le plan $\Sigma$ entre les points $(x_1,y_1)$ et $(x_2,y_2)$ :

$$d_{12}(x_1,y_1) = \sqrt{(x_1\text{-}x_2)^2 + (y_1\text{-}y_2)^2}$$

A partir de cette définition de la disparité, le calcul montre que l'on peut exprimer la disparité dans un couple d'images (1,2) sous la forme :

$$d_{12}(x_1,y_1) = \sqrt{(a_n\text{-}a_m)^2+(c_n\text{-}c_m)^2}\cdot(z_0\text{-}z)$$

où $a_n$, $a_m$, $\underset{\rightarrow}{c_p}$ et $c_m$ sont des coefficients que l'on peut déduire des systèmes linéaires reliant, à $z_0$ constant, $p$ et $q$ et le vecteur $\vec{m}$ défini plus haut dans chaque image.

Dans le cas des images 1 et 3, on aurait, de façon similaire, une relation :

$$d_{13}(x_1,y_1) = \sqrt{(a_p - a_m)^2+(c_p\text{-}c_m)^2}\cdot (z_0\text{-}z)$$

où $a_p$ et $c_p$ jouent le même rôle que $a_n$ et $c_n$. Le modèle linéaire de passage inter-disparité entre le couple $\eta$ des images (1,2) et le couple $\mu$ des images 1,3), lorsque le plan $\Sigma$ est spécifié, s'écrit très simplement sous la forme :

$$d_{13}(x_1,y_1) = a(\eta,\mu) \cdot d_{12}(x_1,y_1)$$

avec :

$$a(\eta,\mu) = \frac{\sqrt{(a_p - a_m)^2 + (c_p - c_m)^2}}{\sqrt{(a_n - a_m)^2 + (c_n - c_m)^2}}$$

On peut ainsi établir, par un calcul qui pourra être fait en parallèle, toutes les courbes de similarité en vue de faire apparaître les pics qui se correspondent.

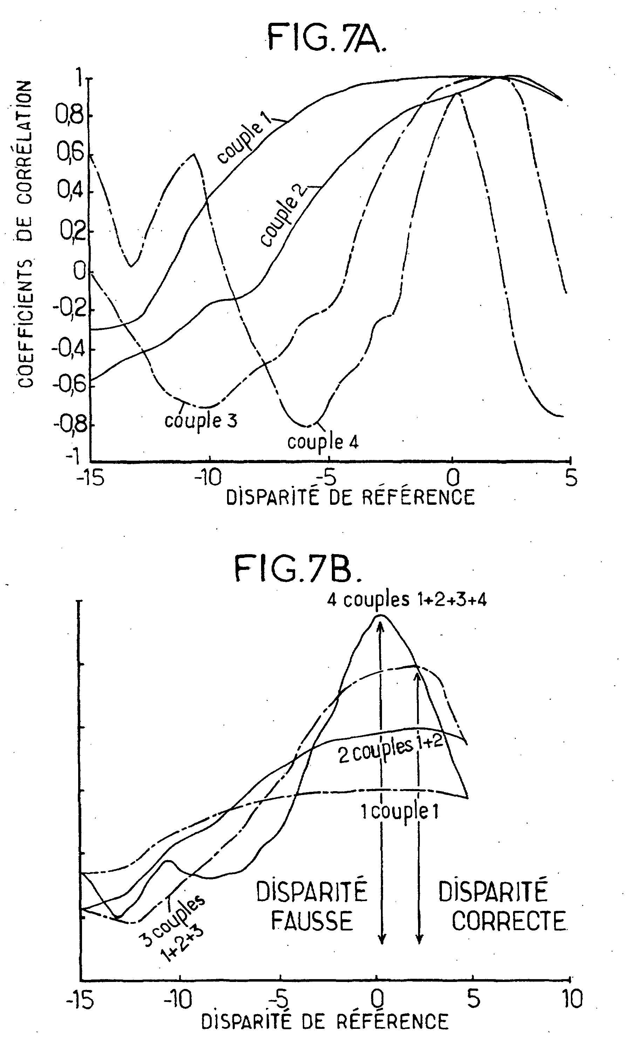

Lors de l'appariement, il convient d'écarter les pics dus à une occultation de points dans une des images du couple. La figure 7B montre, à titre d'exemple, les courbes de ressemblance en fonction de la disparité pour quatre couples. Le pixel de l'image de référence est masqué sur l'autre image dans le couple 4, qui fait apparaître des pics pour des disparités où les autres courbes ne présentent pas de maximum. Dans ce cas, il conviendra d'écarter la courbe 4 pour trouver la disparité correcte pour le pixel masqué. Ce résultat peut notamment être obtenu par un vote majoritaire.

## Revendications

**1.** Procédé de production de données cartographiques en trois dimensions à partir de $\underline{n}$ images à deux dimensions de la scène, fournies par $\underline{n}$ capteurs avec des points de vue différents, $\underline{n}$ étant un entier supérieur à 2, suivant lequel :

(a) on calibre chaque capteur d'ordre $i$ pour estimer les paramètres des $n$ modèles $F_i(x,y,z)$ définissant la relation entre les coordonnées x,y,z d'un point de la scène et les coordonnées $(p,q)_i$ de sa projection dans l'image $i$ parmi les $n$ images ;

(b) on met en correspondance chacun des n-1 couples d'images comportant toutes une même image de référence choisie parmi les $n$ images, en recherchant l'homologue de chaque pixel ou zone de l'image de référence le long de l'épipolaire correspondante de l'autre image du couple ;

(c) dans chacun des n-1 couples de deux images comprenant chacune une image de référence et pour chaque pixel ou zone de l'image de référence, on établit une courbe de ressemblance (courbe de variation d'un indice de similarité) en fonction de la disparité, le long de l'épipolaire de l'autre image ;

(d) on ramène toutes les courbes dans un référentiel commun, par un modèle par exemple affine, pour apparier le plus grand nombre possible d'images ;

(e) on effectue la sommation des courbes, en écartant éventuellement chaque pic situé à une disparité singulière par rapport à celui de toutes les autres courbes et on retient le pic le plus élevé de la courbe résultante ; et

(f) on calcule les coordonnées x,y,z à partir de la disparité du pic retenu et des paramètres des $n$ modèles $F_i$ $(x,y,z)$.

2. Procédé selon la revendication 1, **caractérisé en ce que** l'on effectue plusieurs appariements en prenant différentes images comme référence.

3. Procédé selon la revendication 1 ou 2, **caractérisé en ce qu'**on fusionne les résultats de mise en correspondance multi-couples à l'aide d'un vote majoritaire, en affectant un coefficient de pondération plus élevé aux pics correspondant aux points de vue les plus distants de l'image de référence.

**Patentansprüche**

1. Verfahren zur Erzeugung von dreidimensionalen kartographischen Daten aus $n$ zweidimensionalen Bildern der Szene, die von $n$ Aufnehmern mit verschiedenen Blickpunkten geliefert werden, wobei $n$ eine ganze Zahl größer als 2 ist, gemäß welchem:

(a) jeder Aufnehmer einer Ordnung $i$ kalibriert wird, um die Parameter der $n$ Bildvorlagen $F_i$ (x, y, z) zu schätzen, die die Relation zwischen den Koordinaten x, y, z eines Punkts der Szene und den Koordinaten $(p, q)_i$ seiner Projektion in dem Bild $i$ von den $n$ Bildern definieren;

(b) jedes der n-1 Bildpaare, die alle das gleiche aus den $n$ Bildern ausgewählte Referenzbild aufweisen, in Korrespondenz gebracht wird, wobei das Homolog von jedem Pixel oder jeder Zone des Referenzbildes entlang der entsprechenden epipolaren Linie des anderen Bildes des Paares gesucht wird;

(c) in jedem der n-1 Paare aus zwei Bildern, deren jedes ein Referenzbild enthält, und für jedes Pixel oder jede Zone des Referenzbildes eine Ähnlichkeitskurve (Änderungskurve eines Similaritätswerts) abhängig von der Disparität entlang der epipolaren Linie des anderen Bildes erstellt wird;

(d) alle Kurven in ein gemeinsames Bezugssystem rücküberführt werden durch eine beispielsweise affine Bildvorlage, um die größt mögliche Anzahl von Bildern zu paaren;

(e) die Summierung der Kurven durchgeführt wird, wobei eventuell jeder Peak, der bezogen auf denjenigen aller anderen Kurven bei einer singulären Disparität liegt, entfernt und der höchste Peak der resultieren Kurve übertragen wird;

(f) die Koordinaten x, y, z aus der Disparität des übertragenen Peak und den Parametern der $n$ Bildvorlagen $F_i$ (x, y, z) berechnet werden.

2. Verfahren nach Anspruch 1, **dadurch gekennzeichnet, dass** mehrere Paarungen durchgeführt werden, wobei verschiedene Bilder als Referenz genommen werden.

3. Verfahren nach Anspruch 1 oder 2, **dadurch gekennzeichnet, dass** die Ergebnisse der Zuordnung mehrerer Paare mit Hilfe einer Mehrheitsentscheidung vereinigt werden, wobei den Peaks, die den von dem Referenzbild am weitesten entfernten Blickpunkten entsprechen, ein höherer Gewichtungskoeffizient zugeordnet wird.

**Claims**

1. A method for producing three dimensional cartographic data from n two-dimensional images of the scene provided by n sensors having different points of view, n being an integer higher than 2, comprising the steps of:

   a) calibrating each sensor of order i for estimating parameters of n models $F_i$ (x, y, z) defining the relationship between the coordinates x, y, z of a point in the scene and the coordinates $(p, q)_i$ of its projection in the image i among the n images;

   b) matching each of the n-1 pairs of images, each having a same reference image selected among the n images, by searching an homolog of each pixel or zone of the reference image along the corresponding epipolar line of the other image of the pair;

   c) in each of the n-1 pairs of two images, each comprising a reference image, and for each pixel or zone of the reference image, preparing a resemblance curve (variation curve of a degree of similarity) as a function of disparity along the epipolar line of the other image;

   d) bringing back all the curves into a common reference frame, by an, e.g., affine model for matching a maximum number of the images;

   e) summing the curves by discarding any peak having a disparity which is inconsistent with that of all the other curves, and retaining the highest peak of the resulting curve; and

   f) deriving the coordinates x, y, z from the disparity of the retained peak and the parameters of n models $F_i$ (x, y, z).

2. Method according to claim 1, **characterized in that** a plurality of matchings are carried out with different images as a reference.

3. Method according to claim 1 or 2, **characterized by** the step of combining the multi-pair matching results by means of a majority vote, by assigning a weighting coefficient which is higher for those peaks which correspond to points of view which are most remote from the reference image.

# FIG.1.

# FIG.2.

Appariement

Image 2

$P_1$

Appariement

$E_3$

Image 3

# FIG.3.

S

A

$d_{12}$

S

B

$d_{13}$

S

Indice de similarité

C

$d_{13}$

# FIG.4.

Point à apparier

Images rectifiées

$g_1$  $d_1$

$g_2$  $d_2$

$g_3$  $d_3$

Modèle affine

# FIG.5.

n images

Appariement multi-couples — Calcul de MNE

Appariement multi-couples — Calcul de MNE

Appariement multi-couples — Calcul de MNE

Fusion des MNE → MNE final

m cartes de disparité $(m \leq n)$

m MNE $(m \leq n)$

# FIG.6.

**Image 1 (référence)**     **Image 2**

Pixel à apparier $(p_1, q_1)$

×P

Pixel $(p_2, q_2)$

Point défini par $H_1(p_1, q_1, z_0)$

$\Sigma$

Droite épipolaire réelle

Image de la droite épipolaire dans le plan

Point défini par $H_2(p_2, q_2, z_0)$

# FIG. 7A.

COEFFICIENTS DE CORRÉLATION

couple 1

couple 2

couple 3

couple 4

DISPARITÉ DE RÉFÉRENCE

# FIG. 7B.

4 couples 1+2+3+4

2 couples 1+2

1 couple 1

3 couples 1+2+3

DISPARITÉ FAUSSE

DISPARITÉ CORRECTE

DISPARITÉ DE RÉFÉRENCE